# EUROPEAN PATENT SPECIFICATION

(11) **EP 4 174 340 B1**
(45) Date of publication and mention of the grant of the patent: **15.10.2025**
(21) Application number: 21833542.0
(22) Date of filing: 30.06.2021
(51) Int. Cl.: F16D 65/097, F16D 65/06

(54) **BRAKE PAD**
BREMSBELAG
PLAQUETTE DE FREIN

(30) Priority: 30.06.2020 KR 20200080344
(43) Date of publication of application: 03.05.2023
(73) Proprietor: Dawin Friction Co., Ltd., Incheon 21643 (KR)
(72) Inventor: NA, Jong Tae, Seoul 03984 (KR); CHO, Gi Chul, Siheung-si Gyeonggi-do 14923 (KR); KIM, Yu Shin, Incheon 22143 (KR); LEE, Beom Joo, Incheon 21382 (KR)
(74) Representative: Caldon, Giuliano
(86) International application number: PCT/KR2021/008265
(87) International publication number: WO 2022/005202

(56) References cited:
- EP-B1- 1 368 576
- JP-A- 2014 108 777
- KR-A- 20170 122 341
- KR-B1- 100 784 504
- KR-B1- 101 941 233
- KR-B1- 101 941 233
- US-A- 5 934 418
- US-A1- 2012 211 314
- US-A1- 2019 232 982

## Description

### TECHNICAL FIELD

The present disclosure relates to a brake pad employed in a brake system for a high-speed railway vehicle.

### BACKGROUND ART

In general, a friction brake pad constituting a brake system employed in transportation means generating kinetic energy, for example, a high-speed railway vehicle, a vehicle, and the like includes a friction member having a predetermined shape, a support member supporting the friction member, an elastic member providing uniform contact between the friction member and a disc, an anti-leaning member positioned between the elastic member and the support member to prevent the elastic member from being leaned, a back plate to which these members are coupled, and a dovetail coupled to a lower surface of the back plate to be mounted to the brake system. Document KR 101 941 233 B1 discloses a brake pad of this type according to the state of the art.

In a friction brake pad, the friction member directly contacts a brake disc that is interlocked and rotated with a drive shaft of a high-speed railway vehicle, and thus friction is generated between the brake disc and the friction member. The friction brake pad can decelerate and stop the high-speed railway vehicle by converting and dissipating the kinetic energy of the high-speed railway vehicle into frictional heat in the process of friction.

As the kinetic energy of high-speed railway vehicle is rapidly increased according to the recent high-speed and high-power of means of transportation, a stable frictional performance even in harsher conditions, that is, homogeneity of the friction coefficient, is required for brake systems. In general, the decrease in friction coefficient due to frictional heat at high speed compared to low speed under the same load conditions was taken for granted and allowed. However, friction coefficient homogeneity, which has been required recently, requires a homogeneous state without allowing a decrease in the friction coefficient at high speed compared to that at low speed.

### DISCLOSURE

### TECHNICAL PROBLEM

An object of the present disclosure is to provide a brake pad capable of increasing heat-radiation performance by radiating frictional heat, which is generated during friction, through air cooling.

### TECHNICAL SOLUTION

A brake pad of the present disclosure includes at least one friction members; at least one friction material plates formed to support the friction members bonded to upper surfaces thereof, the number of friction material plates corresponding to that of the friction members, a base plate positioned below the friction material plate; a back plate positioned to be spaced apart from a lower surface of the base plate; an elastic member positioned between a central lower surface of the base plate and an upper surface of the back plate to elastically support the base plate; a central rivet coupling the friction material plate with the back plate so that a central separation height between the base plate and the back plate is maintained by elasticity of the elastic member; and an outer rivet coupling the base plate with the back plate so that an outer separation height between the base plate and the back plate is maintained, wherein the friction material plate includes a plurality of friction plate heat-radiation blades formed to extend outward from an outer circumferential surface of the friction material plate and formed to be spaced apart from each other at predetermined angular interval in a circumferential direction of the friction material plate.

Also, the friction material plate may further include a friction plate heat-radiation hole formed over some region of the friction plate heat-radiation blade therein.

In addition, the friction member includes a friction member hole, the friction material plate includes a friction plate central hole located at a position corresponding to the friction member hole, the base plate includes a base central hole located at a position corresponding to the friction plate central hole and having an inner diameter greater than the friction plate central hole, the back plate includes a back central hole located at a position corresponding to the base central hole and having an inner diameter corresponding to the inner diameter of the base central hole, and the central rivet may include a central body part passing through the base central hole and the back central hole, a central coupling part having a diameter smaller than a diameter of the central body part and passing through the friction plate central hole, and a central head part formed to have a diameter greater than the inner diameter of the back central hole.

Furthermore, the friction material plate includes a central upper stepped-jaw formed between the base central hole and a second central rivet hole, the back plate includes a central lower stepped-jaw formed upward from the lower surface thereof and along the back central hole, and the central rivet may be coupled such that a central body stepped-jaw formed between the central body part and the central coupling part comes into contact with the central upper stepped-jaw and a central head stepped-jaw formed between the central head part and the central body part comes into contact with the central lower stepped-jaw.

Also, the friction material plate includes a plurality of friction plate heat-radiation holes positioned at regular intervals in a circular direction with respect to the friction plate central hole, the base plate includes a base heat-radiation hole located at a position corresponding to the friction plate heat-radiation hole of the friction material plate and having an inner diameter smaller than the friction plate heat-radiation hole, the back plate includes a back outer hole located at a position corresponding to the base heat-radiation hole and having an inner diameter greater than the inner diameter of the base heat-radiation hole, and the outer rivet may include an outer body part passing through the back outer hole, an outer coupling part having a diameter smaller than that of the outer body part and passing through the base heat-radiation hole, and an outer head part formed to have a diameter greater than the inner diameter of the back outer hole.

In addition, the friction material plate includes a friction plate securing protrusion located between the friction plate heat-radiation holes in a circular direction with respect to the friction plate central hole and protruding downward from a lower surface thereof, and the base plate may include a base securing hole formed as a hole penetrating from an upper surface to a lower surface thereof at a position corresponding to the friction plate securing protrusion.

Furthermore, the base plate may further include a base securing protrusion protruding from a periphery of the base central hole in a lower direction of the base plate, and the elastic member may be coupled to the base securing protrusion.

### ADVANTAGEOUS EFFECT

The brake pad of the present disclosure has an advantage that the heat-radiation blade, which is configured to radiate frictional heat generated during friction through a cooling using air, is formed on the friction plate to increase heat-radiation performance.

Also, the brake pad of the present disclosure has an advantage that frictional heat conducted from the friction member is radiated by convection through the heat-radiation blade to maximize performance of each element located below the base plate, thereby reducing loss of an elastic force of the elastic member supporting the friction member.

In addition, the brake pad of the present disclosure has increased heat-radiation performance, thereby reducing deterioration of the elastic member and maintaining the elastic force until wear life of a friction member.

Furthermore, the brake pad according to the present disclosure has an advantage that since the loss of elastic force of the elastic member caused by frictional heat is reduced, uniform contact between the friction member and the brake disc is maintained in the process of friction process, thereby minimizing the temperature deviation of the disc and improving the frictional characteristics.

### DESCRIPTION OF DRAWINGS

FIG. 1 is a plan view of a brake pad according to one embodiment of the present disclosure;
FIG. 2 is a bottom view of the brake pad according to one embodiment of the present disclosure;
FIG. 3 is a vertical cross-sectional view taken along the line A-A in FIG. 1;
FIG. 4 is a vertical cross-sectional view showing a state in which a friction member and a friction material plate of FIG. 1 are coupled to each other;
FIG. 5 is a bottom view of FIG. 4;
FIG. 6 is a vertical cross-sectional view of a base plate of FIG. 1;
FIG. 7 is a bottom view of FIG. 6;
FIG. 8 is an enlarged view of section "B" in FIG. 3; and
FIG. 9 is a bottom view of a brake pad according to another embodiment of the present disclosure and corresponds to FIG. 2.

### BEST MODE OF THE DISCLOSURE

Hereinafter, a brake pad to one embodiments of the present disclosure is described in detail with reference to the accompanying drawings.

Below, a structure of a brake pad according to one embodiment of the present disclosure is described.

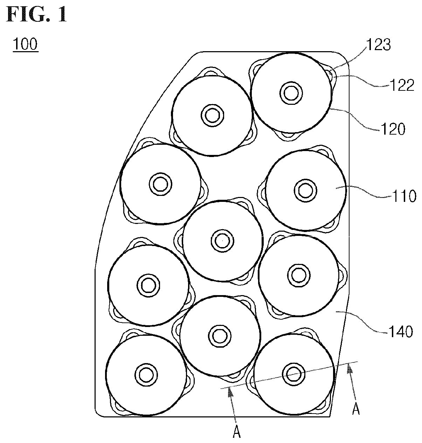

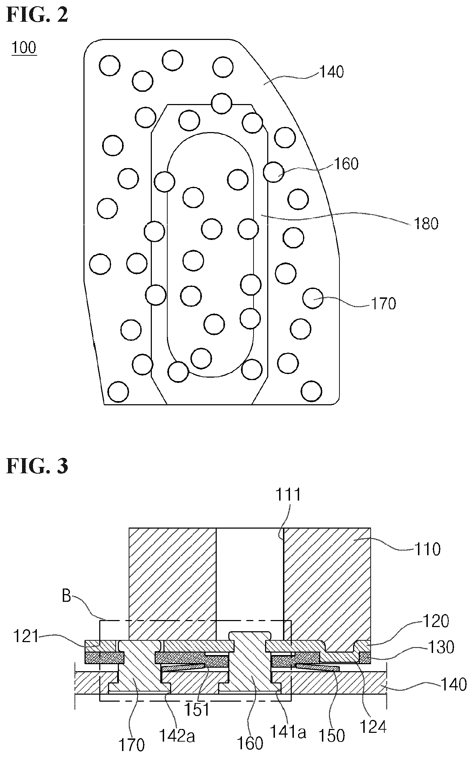

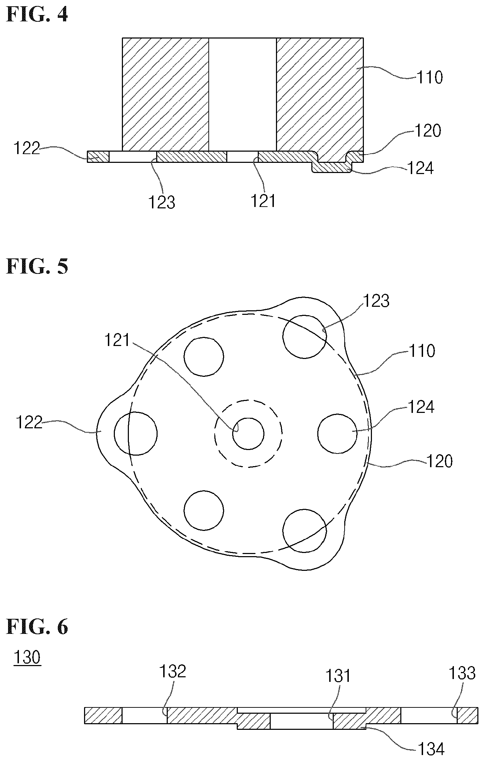

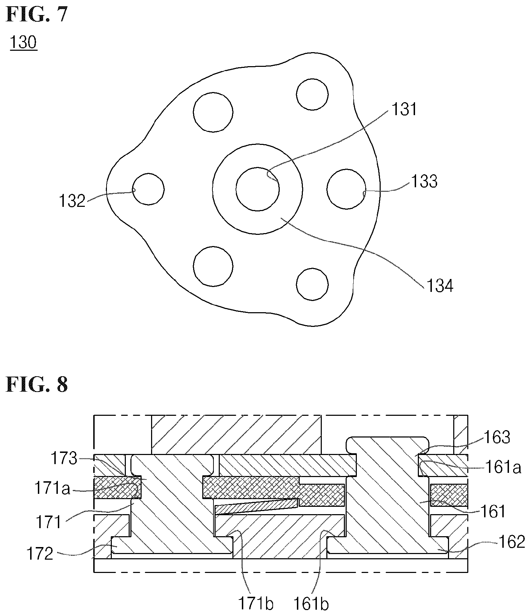

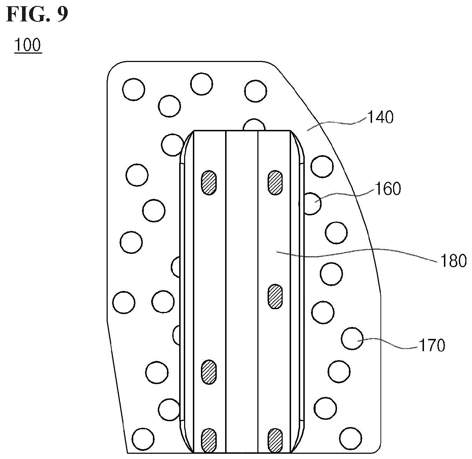

FIG. 1 is a plan view of a brake pad according to one embodiment of the present disclosure. FIG. 2 is a bottom view of the brake pad according to one embodiment of the present disclosure. FIG. 3 is a vertical cross-sectional view taken along the line A-A in FIG. 1. FIG. 4 is a vertical cross-sectional view showing a state in which a friction member and a friction material plate of FIG. 1 are coupled to each other. FIG. 5 is a bottom view of FIG. 4. FIG. 6 is a vertical cross-sectional view of a base plate of FIG. 1. FIG. 7 is a bottom view of FIG. 6. FIG. 8 is an enlarged view of a section "B" in FIG. 3. FIG. 9 is a bottom view of a brake pad according to another embodiment of the present disclosure and corresponds to FIG. 2.

Referring to FIGS. 1 to 8, a brake pad 100 according to one embodiment of the present disclosure includes a friction member 110, a friction material plate 120, a base plate 130, a back plate 140, an elastic member 150, a central rivet 160, an outer rivet 170, and a dovetail 180.

The friction member 110 is formed to have a shape of a cylindrical column having a predetermined height. However, here, the shape of the friction member 110 is not limited, and may be formed in a shape such as a circular column, a quadrangular column, or a hexagonal column. The friction member 110 may be formed to have a predetermined height and area according to a specification of a brake system and a replacement cycle of the brake pad 100.

The friction member 110 is bonded to and coupled to an upper surface of the friction material plate 120 during a sintering process. The friction member 110 is sintered at a predetermined temperature to be manufactured. The friction member 110 includes a base part made of a metal material such as copper, a friction modifier including a metal-based material or a ceramic-based material dispersed in the base part and adjusting friction characteristics, and a lubricant such as graphite.

The friction member 110 is formed to include a friction member hole 111. The friction member hole 111 is formed in a central region area with respect to a plane of the friction member 110, and is preferably formed at a center. The friction member hole 111 is formed as a hole having a predetermined diameter and penetrating the friction member 110 from an upper surface to a lower surface. The friction member hole 111 provides a space necessary for riveting the central rivet 160 which is provided to couple the friction material plate 120 and the base plate 130 to the back plate 140.

The friction material plate 120 includes a friction plate central hole 121, a friction plate heat-radiation blade 122, a friction plate heat-radiation hole 123, and a friction plate securing protrusion 124.

The friction material plate 120 has a shape substantially corresponding to a plane shape of the friction member 110 and may be formed in a plate shape having a predetermined thickness. The friction material plate 120 may be formed in an approximately circular plate shape. In addition, the plurality of friction plate heat-radiation blades 122 may be formed on the friction material plate 120 and extending outward from an outer circumferential surface. The number of the friction material plates 120 corresponds to the number of the friction members 110, and the friction material plates supports the friction member 110 bonded to the upper surface thereof.

The friction plate central hole 121 is formed to penetrate vertically at a central region of the friction material plate 120. The friction plate central hole 121 provides a path through which the central rivet 160 passes. Accordingly, the friction plate central hole 121 may be formed to have an inner diameter corresponding to an upper diameter of the central rivet 160.

The friction plate heat-radiation blade 122 is formed and extending outward from the outer circumferential surface of the friction material plate 120. The plurality of friction plate heat-radiation blades 122 may be formed at predetermined angular-interval in a circumferential direction of the friction material plate 120. The friction plate heat-radiation blades 122 may be formed at angular-interval of at least 120 degrees, such that the at least three friction plate heat-radiation blades may be formed. The friction plate heat-radiation blade 122 may be formed to have a plane shape of a semicircular shape or an arc shape.

The friction plate heat-radiation blade 122 may radiate frictional heat, which is generated and conducted in the process of friction of the friction member 110, to the outside to easily release heat of the friction member 110. In addition, the friction plate heat-radiation blade 122 may decrease conduction of frictional heat generated from the friction member 110 to the elastic member 150, thereby preventing an elastic force of the elastic member 150 from being reduced.

The friction plate heat-radiation hole 123 is formed to penetrate vertically from an outer side of the friction material plate 120. The friction plate heat-radiation hole 123 is formed over some region of the friction plate heat-radiation blade 122 in the friction material plate 120. The friction plate heat-radiation holes 123 may be formed at angular interval, which is the same as that at which the friction plate heat-radiation blades 122 are formed, in the circumferential direction of the friction material plate 120 with respect to the friction plate central hole 121. The friction plate heat-radiation holes 123 may be formed at angular-interval of at least 120 degrees, such that the at least three friction plate heat-radiation holes may be formed. The friction plate heat-radiation hole 123 may be formed in a circular shape. Together with the friction plate heat-radiation blade 122, the friction plate heat-radiation hole 123 may radiate frictional heat, which is generated and conducted in the process of friction of the friction member 110, to the outside to easily release heat of the friction member 110. In addition, the friction plate heat-radiation hole 122 may decrease conduction of frictional heat generated from the friction member 110 to the elastic member 150, thereby preventing an elastic force of the elastic member 150 from being reduced. Furthermore, the friction plate heat-radiation hole 123 provides a space for accommodating an upper portion of the outer rivet 170 which is compressed and deformed.

The friction plate securing protrusion 124 is formed to protrude downward from a lower surface of the friction material plate 120. The friction plate securing protrusion 124 may be formed to have a plane shape of an approximately circular shape. The friction plate securing protrusion 124 may be formed between and spaced apart from the friction plate heat-radiation holes 123 in a circumferential direction. For example, the friction plate securing protrusions 124 may be formed to be spaced apart from each other at an angular interval of 120 degrees with respect to a center of the friction material plate 120. The friction plate securing protrusion 124 may be coupled to the base plate 130 positioned below.

The base plate 130 includes a base central hole 131, a base heat-radiation hole 132, a base securing hole 133, and a base securing protrusion 134.

The base plate 130 has a shape substantially corresponding to the plane shape of the friction material plate 120 and may be formed in a plate shape having a predetermined thickness. Accordingly, the base plate 130 may be formed in an approximately circular plate shape. An upper surface of the base plate 130 is in contact with the lower surface of the friction material plate 120.

The base central hole 131 is formed at a center of the base plate 130 to vertically penetrate the base plate 130. The base central hole 131 provides a path through which the central rivet 160 passes. Therefore, the base central hole 131 may be formed to be connected to the friction plate central hole 121. The base central hole 131 may be formed to have an inner diameter greater than the friction plate central hole 121. **In** addition, the base central hole 131 may be formed to have the inner diameter corresponding to an intermediate diameter portion of the central rivet 160.

The base heat-radiation hole 132 is formed at an outer side of the base plate 132 to penetrate vertically the base plate. The base heat-radiation hole 132 is formed at a position corresponding to the friction plate heat-radiation hole 123. The friction plate heat-radiation holes 123 may be formed at angular interval, which is the same as that at which the friction plate heat-radiation holes 123 are formed, in the circumferential direction of the base plate 130. The at least three base heat-radiation holes 132 may be formed at angular-interval of at least 120 degrees. The base heat-radiation hole 132 may be formed to have a circular shape.

Together with the friction plate heat-radiation hole 123, the base heat-radiation hole 132 may radiate frictional heat, which is generated and conducted in the process of friction of the friction member 110, to the outside to easily release heat of the friction member 110. In addition, the base heat-radiation hole 132 may decrease conduction of frictional heat generated from the friction member 110 to the elastic member 150, thereby preventing an elastic force of the elastic member 150 from being reduced.

In addition, the base heat-radiation hole 132 provides a path through which an upper portion of the outer rivet 170 passes. Accordingly, the base heat-radiation hole 132 may be formed to have a diameter corresponding to the upper portion of the outer rivet 170.

The base securing hole 133 is formed to penetrate the base plate 130 from the upper surface to a lower surface. The base securing hole 133 is formed at a position corresponding to the position where the friction plate securing protrusion 124 of the friction plate placed thereabove is formed. The base securing hole 133 may be formed between and spaced apart from the base heat-radiation holes 132 in a circumferential direction. Accordingly, the base securing holes 133 may be formed to be spaced apart from each other at an angular interval of 120 degrees. Also, the base securing hole 133 may be formed in a plane shape corresponding to the friction plate securing protrusion 124. Therefore, the base securing hole 133 may be formed in a circular plane shape. The base securing hole 133 provides a space into which the friction plate securing protrusion 124 is inserted and coupled.

The base securing protrusion 134 is formed to protrude downward from the lower surface of the base plate 130. The base securing protrusion 134 may be formed to have an approximately circular plane shape. The base securing protrusion 134 may be formed to protrude downward from a periphery of the base central hole 131. Accordingly, the base securing protrusion 134 may be coupled to the elastic member 150 located therebelow.

The back plate 140 includes a back central hole 141 and a back outer hole 142. The back plate 140 is formed in a plate shape having a predetermined thickness. The back plate 140 may be formed to have a plane shape and thickness required for a brake system. An area of the back plate 140 may vary according to the number of the friction members 110 mounted thereon. The back plate 140 may be formed in a shape corresponding to half of a fan shape as a whole. Also, the back plate 140 may be formed to have a fan shape. In addition, the back plate 140 may be formed of an appropriate metal material such as spring steel, alloy steel, special steel, or stainless steel according to required mechanical strength therefor. The back plate 140 supports the plurality of friction members 110, the friction material plate 120 and the base plate 130 coupled to an upper portion thereof. The back plate 140 is placed below the base plate 130 such that an upper surface the back plate is spaced apart from the lower surface of the base plate 130. The upper surface of the back plate 140 is placed to be spaced apart from the lower surface of the base plate 130 by the elastic member 150.

The back central hole 141 is formed at a position corresponding to the position of the base central hole 131 of the base plate 130 located thereabove. The back central holes 12 are formed such that their total number corresponds to the total number of the base central holes 131. The back central hole 141 provides a path through which the central rivet 160 passes and is coupled. The back central hole 141 is formed to have a diameter corresponding to the base central hole 131. In addition, the back plate 140 has a central lower stepped-jaw 141a formed at a lower surface thereof in an upward direction along the back central hole 141. The central lower stepped-jaw 141a is formed to have an inner diameter greater than the diameter of the back central hole 141. On a lower portion of the central lower stepped-jaw 141a, a step is formed in an upward direction.

The back outer hole 142 is formed at a position corresponding to that of the base heat-radiation hole 132 of the base plate 130 coupled to the upper surface of the back plate. The back outer holes 142 are formed such that their total number corresponds to the total number of base heat-radiation holes 132. The back outer hole 142 provides a path to which the outer rivet 170 is coupled. The back outer hole 142 is formed to have an inner diameter greater than that of the base heat-radiation hole 132. In addition, the back outer hole 142 has an outer lower stepped-jaw 142a formed on a lower surface of the back plate and extending in an upward direction. The outer lower stepped-jaw 142a is formed to have an inner diameter greater than the diameter of the back outer hole 142. On a lower portion of the outer lower stepped-jaw 142a, a step is formed in an upward direction.

The elastic member 150 is formed of a cone-shaped plate spring. For example, the elastic member 150 may be formed in a cone shape in which an elastic central hole 151 vertically penetrating the member is formed at a center and an outer portion is inclined radially and downwardly inclined. The elastic member 150 may be formed to have a predetermined height and an outer diameter. The elastic member 150 is formed in a shape in which it is inclined downward from the elastic central hole 151 toward an outer circumferential surface. Here, the above-mentioned cone shape refers to the shape of a figure composed of a base side and a cutting planar surface not including a vertex of a cone among two solid figures formed by cutting a part of a conical structure with a plane parallel to a base side.

The plurality of elastic members 150 are preferably provided to correspond the total number thereof to the number of base securing protrusions 134 of the base plate 130. For example, the elastic member 150 may be one, likewise the number of the base securing protrusion 134. The elastic central hole 151 is formed to have an inner diameter corresponding to an outer diameter of the base securing protrusion 134 of the base plate 130. The elastic member 150 is inserted in the base securing protrusion 134 from a bottom to be coupled thereto.

An inclination angle of the elastic member 150 may be determined according to the outer diameter of the elastic member 150, and the inner diameter and height of the elastic central hole 151. The elastic member 150 is preferably formed of spring steel to retain an elastic force. On the other hand, the elastic member 150 is not limited to a spring formed in a truncated conical plate shape, and may be formed of a spring such as a coil spring.

The elastic member 150 is formed to have a height greater than an outer separation height between the lower surface of the base plate 130 and the upper surface of the back plate 140.

The elastic member 150 is placed between the upper surface of the back plate 140 and the lower surface of the base plate 130. The elastic member 150 elastically supports the base plate 130 when it is coupled between the base plate 130 and the back plate 140. That is, the elastic member 150 supports the friction member 110 to have elasticity with respect to the load applied to a brake disc and the friction member 110 in the process of braking of the brake system. The elastic member 150 tilts the friction member 110 so that when the load applied to the friction member 110 in the process of braking of the brake system is different depending on the position of the friction member, the surface of the friction member 110 comes into uniformly contact with a surface of the brake disc as a whole. When the brake pad 100 comes into contact with the brake disc as a whole, the friction members 110 respectively located at the positions of the brake pad 100 have different distributions of loads applied to their surfaces. The elastic member 150 tilts the friction member 110 while being elastically deformed to allow each friction member 110 to come uniformly into contact with the brake disc as a whole. As each friction member 110 comes into contact with the brake disc as a whole, the brake pad 100 generates a uniform frictional force and prevents local friction between the friction member 110 and the brake disc and wear from being occurred. Since the elastic member 150 elastically supports the friction member 110 at a center, it is possible to more stably support the friction member 110.

The central rivet 160 is formed to include a central body part 161, a central head part 162, and a central coupling part 163. The central head part 162 has a diameter greater than the central body part 161, and the central coupling part 163 has a diameter smaller than the central body part 161. Accordingly, in the central rivet 160, a central body stepped-jaw 161a is formed between the central body part 161 and the central coupling part 163. In the central rivet 160, a central head stepped-jaw 161b is formed between the central head part 162 and the central body part 161.

The central rivet 160 is inserted into the friction member hole 111 of the friction member 110 through the back central hole 141 of the back plate 140, the base central hole 131 of the base plate 130, and the friction plate central hole 121 of the friction material plate 120. At this time, the central rivet 160 is coupled in a state in which the central coupling part 163 is located on an upper side and the central head part 162 is located on a lower side.

The central body part 161 is formed to have a predetermined height according to a thickness of the friction material plate 120, a thickness of the base plate 130, a thickness of the back plate 140, and a height of the elastic member 150. The central body part 161 passes through the base central hole 131 and the back central hole 141, but does not pass through the friction plate central hole 121. The central body part 161 is formed such that when the central rivet 160 is coupled, a central separation height between the lower surface of the base plate 130 and the upper surface of the back plate 140 is smaller than the height of the elastic member 150. If a height of the central body part 161 is too large, the elastic member 150 cannot be secured or the base plate 130 cannot be elastically supported. If the height of the central body part 161 is too small, excessive pressure may be applied to the elastic member 150, causing deformation and reducing the elastic force.

The central body part 161 is formed to have a diameter smaller than an inner diameter of the base central hole 131 of the base plate 130. The central body part 161 is formed to have the diameter greater than the inner diameter of the friction plate central hole 121 of the friction material plate 120. The central body part 161 passes through the base central hole 131 and does not pass through the friction plate central hole 121. Therefore, the central body part 161 is coupled such that an outer side of an upper surface comes into contact with the lower surface of the friction material plate 120. That is, the central body part 161 is coupled such that the central body stepped-jaw 161a comes into contact with the lower surface of the friction material plate 120.

The central head part 162 is formed to have a diameter greater than the inner diameter of the back central hole 141. The central head part 162 is formed to have the diameter smaller than the inner diameter of the central lower stepped-jaw 141a. The central head part 162 is inserted and positioned into the central lower stepped-jaw 141a. In the central head part 162, the central head stepped-jaw 161b is in contact with the central lower stepped-jaw 141a. The central head part 162 is formed to have a height smaller than that of the central lower stepped-jaw 141a. If the height of the central head part 162 is too large, the central head part 162 may protrude below the back plate 140 in the process of friction.

The central coupling part 163 is formed to have a diameter smaller than the inner diameter of the friction plate central hole 121. The central coupling part 163 is formed to have a height greater than a thickness of the friction material plate 120. A portion, which protrudes from the upper surface of the friction material plate 120, of the central coupling part 163 is deformed in the process of riveting, and comes into contact with the upper surface of the friction material plate 120. The central coupling part 163 secures the friction material plate 120 to an upper portion of the central body part 161.

In the central rivet 160, while the central body stepped-jaw 161a comes into contact with a central upper stepped-jaw, an outer side of the upper surface of the central body part 161 supports the lower surface of the friction material plate 120, and the deformed portion of the central coupling part 163 is coupled to the friction material plate 120 while coming into contact with the upper surface of the friction material plate 120. The central rivet 160 secures the friction material plate 120 to the upper portion of the central body part 161. In the central rivet 160, in addition, while the central body stepped-jaw 161b comes into contact with the central lower stepped-jaw 141a, an outer side of an upper surface of the central head part 162 supports the central lower stepped-jaw 141a.

When the friction process is not progressed, the friction material plate 120 is secured so that a central separation height between the base plate 130 and the back plate 140 is maintained by elasticity of the elastic member 150. In the central rivet 160, when the friction process is progressed, while the elastic member 150 is deformed in a state in which the central coupling part 120 is secured to the friction material plate 120, the central body part 161 and the central head part 162 are relatively moved downward with respect to the base plate 130 and the back plate 140. At this time, the central separation height is changed, and increased or decreased according to the friction process. The central rivet 160 is moved upward or downward together with the friction material plate 120 since the central coupling part 163 is coupled to the friction material plate 120. The central rivet 160 allows the friction material plate 120 to be elastically moved upward or downward while the central separation height between the base plate 130 and the back plate 140 is changed in the process of friction. The central rivet 160 is relatively moved with respect to the back plate 140.

The outer rivet 170 is formed to include an outer body part 171, an outer head part 172, and an outer coupling part 173. The outer head part 172 has a diameter greater than that of the outer body part 171, and the outer coupling part 173 has a diameter smaller than that of the outer body part 171. In the outer rivet 170, an outer body stepped-jaw 171a is formed between the outer body part 171 and the outer coupling part 173. In the outer rivet 170, an outer head stepped-jaw 171b is formed between the outer head part 172 and the outer body part 171.

The outer rivet 170 is inserted into the friction plate heat-radiation hole 123 of the friction material plate 120 through the back outer hole 142 of the back plate 140 and the base heat-radiation hole 132 of the base plate 130. At this time, the outer rivet 170 is coupled in a state in which the outer coupling part 173 is located at an upper side and the outer head part 172 is located at a lower side.

The outer body part 171 is formed to have a predetermined height according to the thickness of the base plate 130, the thickness of the back plate, and the height of the elastic member 150. The outer body part 171 is formed such that when the outer rivet 170 is coupled, the outer separation height between the lower surface of the base plate 130 and the upper surface of the back plate 140 is smaller than the height of the elastic member 150. If a height of the outer body part 171 is too small, excessive pressure may be applied to the elastic member 150, causing deformation and reducing an elastic force. The outer body portion 171 may be formed such that its height is smaller than the height of the central body part 161 by the thickness of the friction material plate 120.

The outer body part 171 is formed to have the diameter greater than the inner diameter of the base heat-radiation hole 132 of the base plate 130. The outer body part 171 does not pass through the base heat-radiation hole 132. Accordingly, the outer body part 171 is coupled such that an outer side of an upper surface comes into contact with the lower surface of the base plate 130. That is, the outer body par 171 is coupled such that the outer body stepped-jaw 171a comes into contact with the lower surface of the base plate 130.

The outer head part 172 is formed to have a diameter greater than the inner diameter of the back outer hole 142. The outer head part 172 is formed to have an outer diameter smaller than the inner diameter of the outer lower stepped-jaw 142a. The outer head part 172 is coupled to the back plate 140 so that an outer side of an upper surface comes into contact with the outer lower stepped-jaw 142a. That is, in the outer head part 172, the outer head stepped-jaw 171b is in contact with the outer lower stepped-jaw 142a. The outer head part 172 is formed to have a height smaller than that of the central lower stepped-jaw 142a. If the height of the outer head part 172 is too large, the outer head part 172 may protrude below the back plate 140 in the process of friction.

The outer coupling part 173 is formed to have the diameter smaller than the inner diameter of the base heat-radiation hole 132. The outer coupling part 173 is formed to have a height greater than the thickness of the base plate 130. A portion, which protrudes from the upper surface of the base plate 130, of the outer coupling part 173 is deformed in the process of riveting, and comes into contact with the upper surface of the base plate 130. The outer coupling part 173 secures the base plate 130 to an upper portion of the central body part 171.

In the outer rivet 170, an outer side of the upper surface of the outer body part 171 supports the lower surface of the base plate 130 while the outer body stepped-jaw 171a comes into contact with an outer upper stepped-jaw, and a deformed portion of the outer coupling part 173 is coupled to the base plate 130 while coming into contact with the upper surface of the base plate 130. The outer rivet 170 secures the base plate 130 to the upper portion of the outer body part 171. In the outer rivet 170, in addition, an outer side of the upper surface of the outer head part 170 supports the outer lower stepped-jaw 142a while the outer head stepped-jaw 171b comes into contact with the lower stepped-jaw 142a.

When the friction process does not proceed, the outer rivet 170 secures the base plate 130 to the back plate 130 such that the outer separation height between the base plate 130 and the back plate 140 is maintained by elasticity of the elastic member 150. The outer separation height may be the same as or different from the central separation height. In the outer rivet 170, when the friction process is progressed, in a state in which the outer body part 171 is secured to the base plate 130, the outer body part 171 and the outer head part 172 are relatively moved downward with respect to the back plate 140. Since the outer coupling part 173 is in a state of being coupled to the base plate 130, the outer rivet 170 is moved downward along with the base plate 130. The outer rivet 170 enables the base plate 130 to be moved upward or downward while the outer separation height between the base plate 130 and the back plate 140 is changed in the process of friction. The outer separation heights may be different from each other in the case of three outer rivets 170. The outer separation height may be the same as or different from the central separation height in the process of friction. Since the outer rivet 170 is coupled to the base plate 130, it can be move upward or downward separately from the central rivet 160. However, since the base plate 130 and the friction material plate 120 are in a state in which the base heat-radiation hole 132 are coupled to the friction plate heat-radiation hole 123 with an interference fit tolerance, the central rivet 160 and the outer rivet 170 can be interlocked with each other to be moved upward or downward.

The dovetail 180 is coupled to the lower surface of the back plate 140. The dove tail 180 may be formed in the shape of two bars which are parallel to each other. The dovetail 180 may be formed in a shape in which both ends of two bars are connected to each other. The dovetail 180 is formed to have a configuration in which an outer side surface is inclined toward an inner side surface as it goes upward. The dovetail 180 may be integrally formed with the back plate 140. That is, the dovetail 180 and the back plate 140 may be machined and formed as one body. Also, as shown in FIG. 9, the dovetail 180 may be separately machined and welded to the back plate 140.

The dovetail 180 is not limited to the shape illustrated in the drawings, and may have various shapes depending on a shape of a caliper (not shown) of a brake system in which the brake pad 100 is utilized. In addition, the dovetail 180 is made of a metal material. However, since the dovetail 180 may cause damage to the caliper when it has a strength higher than that of the caliper to be coupled, it is formed of a material having a strength lower than that of a material of the caliper.

On the other hand, the dovetail 180 is formed to include various holes and grooves required to be coupled to the brake system. In addition, since the dovetail 180 is formed in a relatively thick plate shape, slimming holes or grooves may be formed on the dovetail n to reduce weight.

## Claims

1. A brake pad (100), comprising:
at least one friction members (110);
at least one friction material plates (120) formed to support the friction members (110) bonded to upper surfaces thereof, the number of friction material plates (120) corresponding to that of the friction members (110),
a base plate (130) positioned below the friction material plate (120);
a back plate (140) positioned to be spaced apart from a lower surface of the base plate (130);
an elastic member (150) positioned between a central lower surface of the base plate (130) and an upper surface of the back plate (140) to elastically support the base plate (130);
a central rivet (160) coupling the friction material plate (120) with the back plate (140) so that a central separation height between the base plate (130) and the back plate (140) is maintained by elasticity of the elastic member (150); and
an outer rivet (170) coupling the base plate (130) with the back plate (140) so that an outer separation height between the base plate (130) and the back plate (140) is maintained;
**characterised in that**
the friction material plate (120) comprises a plurality of friction plate heat-radiation blades (122) formed to extend outward from an outer circumferential surface of the friction material plate (120) and formed to be spaced apart from each other at predetermined angular interval in a circumferential direction of the friction material plate (120).

2. The brake pad (100) of claim 1, wherein the friction material plate (120) further comprises a friction plate heat-radiation hole (123) formed over some region of the friction plate heat-radiation blade (122) therein.

3. The brake pad (100) of claim 1, wherein
the friction member (110) comprises a friction member hole (111),
the friction material plate (120) comprises a friction plate central hole (121) located at a position corresponding to the friction member hole (111),
the base plate (130) comprises a base central hole (131) located at a position corresponding to the friction plate central hole (121) and having an inner diameter greater than the friction plate central hole (121),
the back plate (140) comprises a back central hole located at a position corresponding to the base central hole (131) and having an inner diameter corresponding to the inner diameter of the base central hole (131), and
the central rivet (160) comprises a central body part (161) passing through the base central hole (131) and the back central hole, a central coupling part (163) having a diameter smaller than a diameter of the central body part (161) and passing through the friction plate central hole (121), and a central head part (162) formed to have a diameter greater than the inner diameter of the back central hole.

4. The brake pad (100) of claim 2, wherein
the friction material plate (120) comprises a central upper stepped-jaw formed between the base central hole (131) and a second central rivet hole,
the back plate (140) comprises a central lower stepped-jaw (141a) formed upward from the lower surface thereof and along the back central hole, and
the central rivet (160) is coupled such that a central body stepped-jaw (161a) formed between the central body part (161) and the central coupling part (163) comes into contact with the central upper stepped-jaw and a central head stepped-jaw (161b) formed between the central head part (162) and the central body part (161) comes into contact with the central lower stepped-jaw (141a).

5. The brake pad (100) of claim 2, wherein
the friction material plate (120) comprises a plurality of friction plate heat-radiation holes (123) positioned at regular intervals in a circular direction with respect to the friction plate central hole (121),
the base plate (130) comprises a base heat-radiation hole (132) located at a position corresponding to the friction plate heat-radiation hole (123) of the friction material plate (120),
and having an inner diameter smaller than the friction plate heat-radiation hole (123),
the back plate (140) comprises a back outer hole located at a position corresponding to the base heat-radiation hole (132) and having an inner diameter greater than the inner diameter of the base heat-radiation hole (132), and
the outer rivet (170) comprises an outer body part (171) passing through the back outer hole, an outer coupling part having a diameter smaller than that of the outer body part (171) and passing through the base heat-radiation hole (132), and an outer head part (172) formed to have a diameter greater than the inner diameter of the back outer hole.

6. The brake pad (100) of claim 5, wherein
the friction material plate (120) comprises a friction plate securing protrusion (124) located between the friction plate heat-radiation holes (123) in a circular direction with respect to the friction plate central hole (121) and protruding downward from a lower surface thereof, and
the base plate (130) comprise a base securing hole (133) formed as a hole penetrating from an upper surface to a lower surface thereof at a position corresponding to the friction plate securing protrusion (124).

7. The brake pad (100) of claim 5, wherein the base plate (130) further comprises a base securing protrusion (134) protruding from a periphery of the base central hole (131) in a lower direction of the base plate (130), and the elastic member (150) is coupled to the base securing protrusion (134).

## Patentansprüche

1. Bremsbelag (100), umfassend:
mindestens ein Reibungselement (110);
mindestens eine Reibmaterialplatte (120), die geformt ist, um die an oberen Oberflächen derselben verklebten Reibungselemente (110) zu tragen, wobei die Anzahl der Reibmaterialplatten (120) der Anzahl der Reibungselemente (110) entspricht,
eine Grundplatte (130), die unterhalb der Reibmaterialplatte (120) positioniert ist;
eine Rückplatte (140), die so positioniert ist, dass sie von einer unteren Fläche der Grundplatte (130) im Abstand gehalten wird;
ein elastisches Element (150), das zwischen einer mittleren unteren Fläche der Grundplatte (130) und einer oberen Fläche der Rückplatte (140) positioniert ist, um die Grundplatte (130) elastisch zu stützen;
eine mittlere Niete (160), die die Reibmaterialplatte (120) mit der Rückplatte (140) koppelt, so dass eine mittlere Trennhöhe zwischen der Grundplatte (130) und der Rückplatte (140) durch die Elastizität des elastischen Elements (150) aufrechterhalten wird; und
eine äußere Niete (170), die die Grundplatte (130) mit der Rückplatte (140) koppelt, so dass eine äußere Trennhöhe zwischen der Grundplatte (130) und der Rückplatte (140) aufrechterhalten wird;
**dadurch gekennzeichnet, dass** die Reibmaterialplatte (120) eine Vielzahl von Reibungsplatten-Wärmestrahlungslamellen (122) umfasst, die ausgebildet sind, um von einer äußeren Umfangsfläche der Reibmaterialplatte (120) nach außen zu verlaufen, und ausgebildet sind, um in einer Umfangsrichtung der Reibmaterialplatte (120) in einem vorgegebenen Winkelintervall zueinander im Abstand gehalten zu werden.

2. Bremsbelag (100) nach Anspruch 1, wobei die Reibmaterialplatte (120) außerdem eine Reibungsplatten-Wärmestrahlungsöffnung (123) umfasst, die über einem Bereich der Reibungsplatten-Wärmestrahlungslamelle (122) darin ausgebildet ist.

3. Bremsbelag (100) nach Anspruch 1, wobei
das Reibungselement (110) eine Reibungselementöffnung (111) umfasst,
die Reibmaterialplatte (120) eine mittlere Reibungsplattenöffnung (121) umfasst, die sich in einer Position befindet, die der Reibungselementöffnung (111) entspricht,
die Grundplatte (130) eine mittlere Grundöffnung (131) umfasst, die sich in einer Position befindet, die der mittleren Öffnung (121) der Reibungsplatte entspricht und einen größeren Innendurchmesser als die mittlere Öffnung (121) der Reibungsplatte aufweist,
die Rückplatte (140) eine rückseitige mittlere Öffnung umfasst, die sich in einer Position befindet, die der mittleren Grundöffnung (131) entspricht und einen Innendurchmesser aufweist, der dem Innendurchmesser der mittleren Grundöffnung (131) entspricht, und
die mittlere Niete (160) ein Mittelkörperteil (161), das durch die mittlere Grundöffnung (131) und die rückseitige mittlere Öffnung hindurch verläuft, ein mittleres Kupplungsteil (163), das einen Durchmesser aufweist, der kleiner als ein Durchmesser des Mittelkörperteils (161) ist und durch die mittlere Öffnung (121) der Reibungsplatte hindurch verläuft, und ein mittleres Kopfteil (162), das ausgebildet ist, um einen Durchmesser aufzuweisen, der größer als der Innendurchmesser der rückseitigen mittleren Öffnung ist, umfasst.

4. Bremsbelag (100) nach Anspruch 2, wobei
die Reibmaterialplatte (120) eine mittlere obere Stufenbacke aufweist, die zwischen der mittleren Grundöffnung (131) und einer zweiten mittleren Nietenöffnung ausgebildet ist,
die Rückplatte (140) eine mittlere untere Stufenbacke (141a) umfasst, die von der unteren Oberfläche derselben und entlang der rückseitigen mittleren Öffnung nach oben ausgebildet ist, und
die mittlere Niete (160) so gekoppelt ist, dass eine Mittelkörper-Stufenbacke (161a), die zwischen dem Mittelkörperteil (161) und dem mittleren Kupplungsteil (163) ausgebildet ist, in Kontakt mit der mittleren oberen Stufenbacke gelangt, und eine mittlere Kopf-Stufenbacke (161b), die zwischen dem mittleren Kopfteil (162) und dem Mittelkörperteil (161) ausgebildet ist, in Kontakt mit der mittleren unteren Stufenbacke (141a) gelangt.

5. Bremsbelag (100) nach Anspruch 2, wobei
die Reibmaterialplatte (120) eine Vielzahl von Reibungsplatten-Wärmestrahlungsöffnungen (123) umfasst, die in regelmäßigen Abständen in einer kreisförmigen Richtung im Verhältnis zu der mittleren Öffnung der Reibungsplatte (121) positioniert sind,
die Grundplatte (130) eine Grund-Wärmestrahlungsöffnung (132) umfasst, die sich in einer Position befindet, die der Reibungsplatten-Wärmestrahlungsöffnung (123) der Reibmaterialplatte (120) entspricht,
und einen Innendurchmesser aufweist, der kleiner ist als die Reibungsplatten-Wärmestrahlungsöffnung (123),
die Rückplatte (140) eine rückseitige äußere Öffnung umfasst, die sich in einer Position befindet, die der Grund-Wärmestrahlungsöffnung (132) entspricht und einen Innendurchmesser aufweist, der größer ist als der Innendurchmesser der Grund-Wärmestrahlungsöffnung (132), und
die äußere Niete (170) einen Außenkörperteil (171), der durch die rückseitige äußere Öffnung hindurch verläuft, ein äußeres Kupplungsteil, das einen kleineren Durchmesser als das Außenkörperteil (171) aufweist und durch die Grund-Wärmestrahlungsöffnung (132) hindurch verläuft, und ein äußeres Kopfteil (172) umfasst, das ausgebildet ist, um einen größeren Durchmesser als den Innendurchmesser der rückseitigen äußeren Öffnung aufzuweisen.

6. Bremsbelag (100) nach Anspruch 5, wobei
die Reibmaterialplatte (120) einen Reibungsplatten-Befestigungsvorsprung (124) umfasst, der zwischen den Reibungsplatten-Wärmestrahlungsöffnungen (123) in einer kreisförmigen Richtung im Verhältnis zu der mittleren Öffnung (121) der Reibungsplatte positioniert ist und von einer unteren Fläche derselben nach unten vorsteht, und
die Grundplatte (130) eine Grundbefestigungsöffnung (133) umfasst, die als eine Öffnung ausgebildet ist, die von einer oberen Fläche zu einer unteren Fläche derselben in einer Position vordringt, die dem Reibungsplatten-Befestigungsvorsprung (124) entspricht.

7. Bremsbelag (100) nach Anspruch 5, wobei die Grundplatte (130) außerdem einen Grundbefestigungsvorsprung (134) umfasst, der von einem Umfang der mittleren Grundöffnung (131) in einer unteren Richtung der Grundplatte (130) vorsteht, und das elastische Element (150) mit dem Grundbefestigungsvorsprung (134) gekoppelt ist.

## Revendications

1. Plaquette de frein (100), comprenant :
au moins un élément de frottement (110) ;
au moins une plaque de matériau de frottement (120) formée pour supporter les éléments de frottement (110) jointe à leurs surfaces supérieures, le nombre de plaques de matériau de frottement (120) correspondant à celui des éléments de frottement (110),
une plaque de base (130) positionnée sous la plaque de matériau de frottement (120) ;
une plaque arrière (140) positionnée de façon à être espacée d'une surface inférieure de la plaque de base (130) ;
un élément élastique (150) positionné entre une surface inférieure centrale de la plaque de base (130) et une surface supérieure de la plaque arrière (140) pour supporter élastiquement la plaque de base (130) ;
un rivet central (160) couplant la plaque de matériau de frottement (120) à la plaque arrière (140) de telle sorte qu'une hauteur de séparation centrale entre la plaque de base (130) et la plaque arrière (140) est maintenue au moyen de l'élasticité de l'élément élastique (150) ; et
un rivet extérieur (170) couplant la plaque de base (130) à la plaque arrière (140) de telle sorte qu'une hauteur de séparation extérieure entre la plaque de base (130) et la plaque arrière (140) est maintenue ;
**caractérisée en ce que** la plaque de matériau de frottement (120) comprend une pluralité d'ailettes de rayonnement thermique de plaque de frottement (122) formées pour s'étendre vers l'extérieur à partir d''ne surface circonférentielle externe de la plaque de matériau de frottement (120) et formées pour être espacées les unes des autres à un intervalle angulaire prédéterminé dans une direction circonférentielle de la plaque de matériau de frottement (120).

2. Plaquette de frein (100) selon la revendication 1, où la plaque de matériau de frottement (120) comprend en outre un trou de rayonnement thermique de plaque de frottement (123) formé sur une partie de la région de l'ailette de rayonnement thermique de plaque de frottement (122) dans celle-ci.

3. Plaquette de frein (100) selon la revendication 1, où
l'élément de frottement (110) comprend un trou d'élément de frottement (111),
la plaque de matériau de frottement (120) comprend un trou central de plaque de frottement (121) situé au niveau d'une position correspondant au trou d'élément de frottement (111),
la plaque de base (130) comprend un trou central de base (131) situé au niveau d'une position correspondant au trou central de plaque de frottement (121) et ayant un diamètre intérieur supérieur au trou central de plaque de frottement (121),
la plaque arrière (140) comprend un trou central arrière situé au niveau d'une position correspondant au trou central de base (131) et ayant un diamètre intérieur correspondant au diamètre intérieur du trou central de base (131), et
le rivet central (160) comprend une partie de corps centrale (161) passant à travers le trou central de base (131) et le trou central arrière, une partie de couplage centrale (163) ayant un diamètre inférieur à un diamètre de la partie de corps centrale (161) et passant à travers le trou central de plaque de frottement (121), et une partie de tête centrale (162) formée pour avoir un diamètre supérieur au diamètre intérieur du trou central arrière.

4. Plaquette de frein (100) selon la revendication 2, où
la plaque de matériau de frottement (120) comprend une mâchoire étagée supérieure et centrale formée entre le trou central de base (131) et un second trou de rivet central,
la plaque arrière (140) comprend une mâchoire étagée inférieure centrale (141a) formée vers le haut à partir de sa surface inférieure et le long du trou central arrière, et
le rivet central (160) est couplé de telle sorte qu'une mâchoire étagée de corps centrale (161a) formée entre la partie de corps centrale (161) et la partie de couplage centrale (163) entre en contact avec la mâchoire étagée supérieure centrale et qu'une mâchoire étagée de tête centrale (161b) formée entre la partie de tête centrale (162) et la partie de corps centrale (161) entre en contact avec la mâchoire étagée inférieure centrale (141a).

5. Plaquette de frein (100) selon la revendication 2, où
la plaque de matériau de frottement (120) comprend une pluralité de trous de rayonnement thermique de plaque de frottement (123) positionnés à des intervalles réguliers dans une direction circulaire par rapport au trou central de plaque de frottement (121),
la plaque de base (130) comprend un trou de rayonnement thermique de base (132) situé au niveau d'une position correspondant au trou de rayonnement thermique de plaque de frottement (123) de la plaque de matériau de frottement (120),
et ayant un diamètre intérieur plus petit que le trou de rayonnement thermique de plaque de frottement (123),
la plaque arrière (140) comprend un trou extérieur arrière situé au niveau d'une position correspondant au trou de rayonnement thermique de base (132) et
ayant un diamètre intérieur supérieur au diamètre intérieur du trou de rayonnement thermique de base (132), et
le rivet extérieur (170) comprend une partie de corps extérieure (171) passant à travers le trou extérieur arrière, une partie de couplage extérieure ayant un diamètre inférieur à celui de la partie de corps extérieure (171) et passant à travers le trou de rayonnement thermique de base (132), et une partie de tête extérieure (172) formée pour avoir un diamètre supérieur au diamètre intérieur du trou extérieur arrière.

6. Plaquette de frein (100) selon la revendication 5, où
la plaque de matériau de frottement (120) comprend une saillie de fixation de plaque de frottement (124) située entre les trous de rayonnement thermique de plaque de frottement (123) dans une direction circulaire par rapport au trou central de la plaque de frottement (121) et faisant saillie vers le bas à partir d'une surface inférieure de celle-ci, et
la plaque de base (130) comprend un trou de fixation de base (133) formé comme un trou pénétrant d'une surface supérieure à une surface inférieure de celle-ci au niveau d'une position correspondant à la saillie de fixation de plaque de frottement (124).

7. Plaquette de frein (100) selon la revendication 5, où la plaque de base (130) comprend en outre une saillie de fixation de base (134) faisant saillie d'une périphérie du trou central de base (131) dans une direction inférieure de la plaque de base (130), et l'élément élastique (150) est couplé à la saillie de fixation de base (134).
